# EUROPÄISCHE PATENTSCHRIFT

(11) **EP 0 423 381 B1**
(45) Veröffentlichungstag und Bekanntmachung des Hinweises auf die Patenterteilung: **14.12.1994**
(21) Anmeldenummer: 89119174.4
(22) Anmeldetag: 16.10.1989
(51) Int. Cl.: H04H 1/00

(54) **Vorrichtung zur Übertragung von Audioinformationen und/oder digitalen Informationen**
Apparatus for transmitting audio and/or digital information
Dispositif de transmission d'information audio et/ou numérique

(43) Veröffentlichungstag der Anmeldung: 24.04.1991
(73) Patentinhaber: MPS Media Presse Service GmbH & Co. KG, D-52068 Aachen (DE)
(72) Erfinder: Fortier, Daniel, F-66760 Ur (FR)
(74) Vertreter: Schwabe - Sandmair - Marx

(56) Entgegenhaltungen:
- EP-A- 0 338 917
- DE-A- 1 762 730
- FR-A- 2 633 121
- GB-A- 2 146 204
- US-A- 4 178 549
- US-A- 4 660 193
- US-A- 4 782 531
- IEEE TRANSACTIONS ON BROADCASTING, Band BC-27, Nr. 4, Dezember 1981, Seiten 65-70, IEEE, New York, US; H.R. ANDERSON et al.: "A technique for digitalinformation broadcasting using SCA channels"

## Beschreibung

### Vorrichtung zur Übertragung von Audio- und/oder digitalen Informationen

Die Erfindung bezieht sich auf eine Vorrichtung zur Übertragung von Audio- und/oder digitalen Informationen, z.B. über einen Satellitenkanal oder eine Spezialleitung gemäß dem Oberbegriff des Patentanspruchs 1, die es erlaubt, mehrere Audio- und/oder digitale Informationen auf demselben Kanal oder auf derselben Leitung zu übertragen.

Die bekanntesten Verfahren auf diesem Gebiet sind:
- das DBR-System (über Satellitenkanal oder Spezialleitung) das darin besteht, im oberen Frequenzbereich des hörbaren Frequenzbandes von 0 bis 12 kHz digitale (nicht wahrnehmbare) Signale mit einer Bandbreite von ungefähr 1000 Hz zu übertragen;
- das SCA-System (über terrestrisches Netz), bei dem die Audiosignale im Frequenzband von 40-53000 Hz übertragen werden und die digitalen Signale mit einer Bandbreite von etwa 4000 Hz auf einen Unterträger einer Frequenz von 67 kHz aufmoduliert übertragen werden.

Diese Systeme haben die folgenden Nachteile:
- die Realisierung der Elektronik ist aufwendig;
- ein spezieller Empfangsdekoder ist notwendig;
- auf einem Kanal oder auf einer Leitung ist nur ein einziges Audiosignal oder nur ein einziges digitales Signal übertragbar.

Aus der US-A-4,660,193 ist ein System zur digitalen Übertragung über übliche Sendestationen bekannt. Dabei wird das mit zu übertragende Signal um 90° gegenüber einem Sekundärsignal phasenverschoben. Das zu übertragende Audio-Signal wird auf ein Band beschränkt, das unterhalb von 5 kHz angesiedelt ist. Ein zusätzliches Signal wird zusammen mit dem Audiosignal überlagert und das Gesamtsignal wird auf eine höhere Frequenz angehoben, einer Trägerfrequenz aufmoduliert, verstärkt und übertragen. In der Empfängerstation wird das empfangene Signal der umgekehrten Prozedur unterzogen und das zu übertragende bzw. übertragene Signal wird extrahiert und kann in lesbare bzw. verarbeitbare Informationen umgesetzt werden.

Aus der US-A-4,782,531 ist ein Übertragungssystem mit einer mehrkanaligen Unterträgerfrequenz bekannt. Hier wird ein Stereoband von ca. 0 bis 53 kHz verwendet, das auf einen Subträger von ca. 100 kHz aufmoduliert wird. Dabei sollen eine Vielzahl von unabhängigen Signalen übertragen werden, wobei jeweils auf einer Trägerfrequenz mehrere einander überlagerte Signale, die in einem Phasenschieber um einen gewissen Phasenwinkel gedreht worden sind, übertragen werden.

Jedoch weisen auch die oben erwähnten Systeme bzw. Verfahrensweisen zumindest einige der oben erörterten Nachteile auf.

Der Erfindung liegt die Aufgabe zugrunde, eine Vorrichtung zur Übertragung von Audio- und/oder digitalen Information anzugeben, mit der mehrere Audio- und/oder digitale Informationen auf demselben Übertragungskanal übertragen werden können.

Diese Aufgabe wird durch eine Vorrichtung mit den im Patentanspruch 1 aufgeführten Merkmalen gelöst, wobei die erfindungsgemäße Vorrichtung einen Sendekreis umfaßt, bestehend aus:
- einer ersten Audionormal-Digital-Einheit, bestehend aus
   . einem Pegeladapter, gefolgt von einem Tiefpaßfilter mit einer Grenzfrequenz von z.B. 4500 Hz, das mit dem ersten Eingang einer ersten elektronischen Torschaltung verbunden ist,
   . einem ersten digitalen Schaltkreis, der mit dem zweiten Eingang der ersten Torschaltung verbunden ist, so daß das Vorhandensein eines digitalen modulierten Signals die Torschaltung veranlaßt, nur die besagte Nachricht durchzulassen;
- einer zweiten Audiounterträger-Digital-Einheit bestehend aus:
   . einem Pegeladapter, gefolgt von einem Tiefpaßfilter mit einer Grenzfrequenz von z.B. 6000 Hz, das mit dem ersten Eingang einer zweiten elektronischen Torschaltung verbunden ist,
   . einem zweiten digitalen Schaltkreis, der mit dem zweiten Eingang der zweiten Torschaltung verbunden ist, so daß das Anliegen eines digitalen modulierten Signals die Torschaltung veranlaßt, nur die besagte Nachricht durchzulassen;
- einer Preemphasiesschaltung, die einen Unterträgermodulator umfaßt, der mit z.B. 12000 Hz oder 67000 Hz durch Umschalter umschaltbar ist und am Ausgang der zweiten Torschaltung der zweiten Einheit vorgesehen ist;
- einen Summierer, der die Signale vom Ausgang der ersten Torschaltung und die des Unterträgermodulators aufnimmt und einem Standardleitungsadapter, einer Spezialleitung oder einem Satellitenkanal vorgeschaltet ist.

Die Vorrichtung gemäß der Erfindung vermag wie folgt zu arbeiten :
- das Standardband von 40-15000 Hz kann in zwei Teilkanäle aufgeteilt werden, die jeder in gleicher Weise geeignet sind, abwechselnd oder simultan eine Audionachricht oder zwei gleichzeitige digitale Nachrichten zu übertragen;
- programmgesteuert kann jede Audio- oder digitale Nachricht an einen von 64 möglichen Teilnehmern über die Teilkanäle adressiert werden;
- die Freigabe einer einem bestimmten Teilnehmer zugeordnete Nachricht findet erst dann statt, wenn von zehn Befehlen die infolge und innerhalb einer wohl definierten Zeit empfangen wurden, acht identisch sind, damit alle Zuordnungsfehler vermieden werden.

Die erfindungsgemäße Vorrichtung vermag ferner wie folgt zu arbeiten, wobei:
- der erste Teilkanal innerhalb eines Frequenzbandes liegt, das von etwa 40 Hz bis etwa 4500 Hz reicht;
- der zweite Teilkanal in einem Frequenzband liegt, das von etwa 4500 Hz bis etwa 15000 Hz reicht;
- die normale Audionachricht, die eine Übertragungsbandbreite von etwa 4000 Hz hat, über den ersten Teilkanal übertragen wird;
- die Unterträgeraudionachricht, die eine Übertragungsbandbreite von etwa 4000 Hz hat, über den zweiten Teilkanal übertragen wird;
- die Audionachricht oder beide digitalen Nachrichten eines Teilkanals gleichermaßen übertragen werden können:
   . entweder mittels eines frequenzmodulierten Stereosenders unter Verwendung des Unterträger-SCA-Verfahrens,
   . oder mittels eines frequenzmodulierten Monosenders unter Verwendung des Mehr-Unterträger-SCA-Verfahrens,
   . oder mittels eines Telefons oder Funktelefons mit reduzierter Bandbreite (200-3500 Hz).

Die aus der erfindungsgemäßen Vorrichtung resultierenden Vorteile, die nachfolgend im einzelnen beschrieben werden, sind:
- Kostengünstigkeit bei einem oder auch mehreren Kanälen im Falle von 64 Adressierungen;
- die digitalen Kanäle bieten die Adaption an alle Systeme, die das Standard-Interface RS 232/300 bauds verwenden, an: Empfangsdekoder, Einstellungen, Überwachung, spezielle Software ist nicht mehr notwendig. Die Sendung kommt direkt auf einem Drucker oder einem Bildschirm mit sofortiger Wiedergabe an unter der einzigen Voraussetzung, daß das betreffende Endgerät eingeschaltet ist;
- rationelle Planung der Elektronik;
- Sicherheit der Adressierung: 8 identisch empfangene Befehle auf 10 übertragene Befehle;
- keine warnehmbaren Signale bei der Umschaltung von normalem Audiosignal auf Unterträgeraudiosignal, wegen einer speziellen zeitlichen Unterteilung;
- das System ist auch während der Übertragung von digitalen Informationen durchlässig.

Die Eigenschaften und die Vorteile der Erfindung sind aus der folgenden detaillierten Beschreibung ersichtlich, in der ein bevorzugtes Ausführungsbeispiel der Erfindung anhand der Zeichnungen erläutert wird. Es zeigt:
- Fig. 1: ein Prinzipschema des auf der erfindungsgemäßen Vorrichtung arbeitenden Verfahrens;
- Fig. 2: ein Prinzipschema des auf der erfindungsgemäßen Vorrichtung arbeitenden Verfahrens, angewandt bei der SCA-Stereoübertragung;
- Fig. 3: ein Prinzipschema des auf der erfindungsgemäßen Vorrichtung arbeitenden Verfahrens, angewandt bei der SCA-Monoübertragung;
- Fig. 4: ein Prinzipschema des auf der erfindungsgemäßen Vorrichtung arbeitenden Verfahrens, angewandt bei der telefonischen oder funktelefonischen Übertragung;
- Fig. 5: ein Blockschaltbild eines Sendeschaltkreises;
- Fig. 6: ein Blockschaltbild eines digitalen Sendeschaltkreises;
- Fig. 7: ein Blockschaltbild einer Standardempfängerschaltung;
- Fig. 8: ein Blockschaltbild einer digitalen Empfängerschaltung;
- Fig. 9: ein Blockschaltbild einer Schaltung für die Identifizierung der Teilnehmeradresse;
- Fig. 10: ein Blockschaltbild eines SCA-Empfängers, und
- Fig. 11: das Schema für die zeitliche Aufteilung für die Umschaltung von normalem Audio auf Audiounterträger.

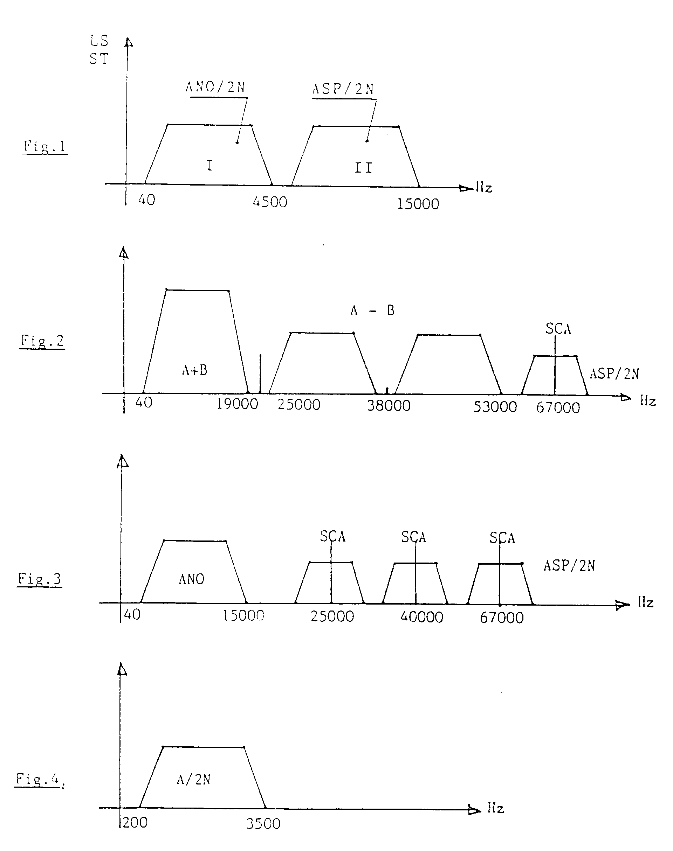

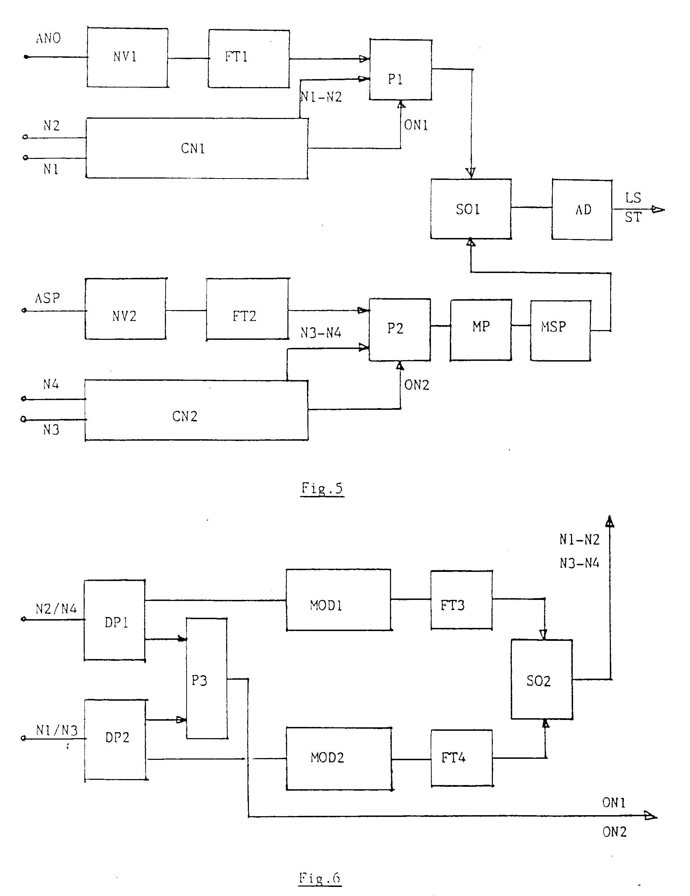

Das auf der erfindungsgemäßen Vorrichtung arbeitende Verfahren zur Übertragung von Audio- und/oder digitalen Informationen, z.B. über einen Satellitenkanal (ST) oder über eine Spezialleitung (LS), wie durch die Figuren 1 bis 4 dargestellt, besteht im wesentlichen aus:
- Unterteilung des Standardfrequenzbandes von 40-15000 Hz in zwei Teilkanäle I und II, die jeder gleichermaßen geeignet sind, abwechselnd oder simultan eine Audionachricht (ANO oder ASP) oder zwei gleichzeitige digitale Nachrichten (2N) zu übertragen;
- programmierbare Adressierung jeder Audio- oder digitalen Nachricht an einen von 64 möglichen Teilnehmern über Teilkanal;
- Freigabe aller einem bestimmten Teilnehmer zugeordneter Nachrichten von dem Augenblick an, zu welchem von 10 in Folge und in einer bestimmten Zeit empfangenen Befehlen 8 identisch sind;
- Verlegen des Teilkanals I in den Frequenzbereich, der zwischen etwa 40 und 4500 Hz liegt;
- Verlegen des Teilkanals II in den Frequenzbereich, der zwischen etwa 4500 und 15000 Hz liegt;
- Übertragen der normalen Audionachricht (ANO), die eine Bandbreite von etwa 4000 Hz hat, über den Teilkanal I;
- Übertragen der Unterträgeraudionachricht (ASP), die eine Bandbreite von etwa 4000 Hz hat, über den Teilkanal II;
- Übertragen der Audionachricht oder der beiden digitalen Nachrichten eines Teilkanals:
   . entweder mittels eines frequenzmodulierten Stereosenders, wobei das SCA-Unterträgerverfahren mit 67 kHz Mittenfrequenz verwendet wird, oder
   . mittels eines Telefons oder Funktelefons im reduzierten Band, das von 200 bis 3500 Hz reicht.

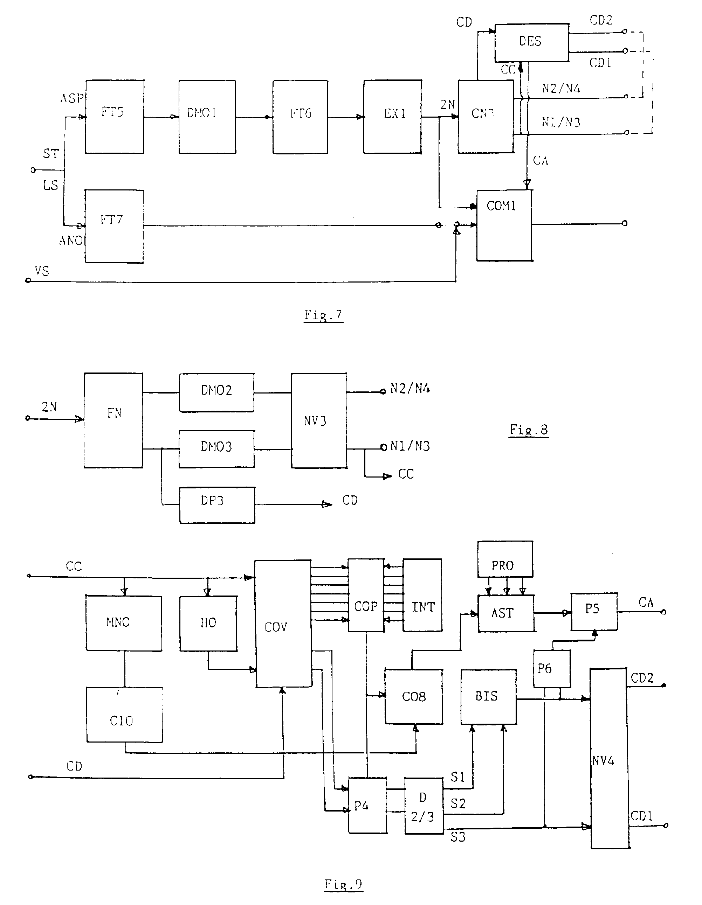

Die erfindungsgemäße Vorrichtung zur Ausführung des Verfahrens gemäß Fig. 5 enthält einen Sendeschaltkreis, bestehend aus:
- einer ersten Audionormal-(ANO)-Digital-(N1-N2)-Einheit bestehend aus:
   . einem Pegelanpasser (NV1), gefolgt von einem Tiefpaßfilter (FT1) für z.B. 4500 Hz, das mit dem ersten Eingang einer elektronischen Torschaltung (P1) verbunden ist,
   . einem digitalen Schaltkreis (CN1), der mit dem zweiten Eingang der Torschaltung (P1) verbunden ist, sodaß das Anliegen eines digitalen modulierten Signals (N1-N2) die Torschaltung (P1) so steuert (Befehl ON1), daß nur die besagte Nachricht durchgelassen wird;
- einer zweiten Audio-Unterträger-(ASP)-Digital-(N3-N4)-Einheit, bestehend aus:
   . einem Pegeladapter (NV2), gefolgt von einem Tiefpaßfilter (FT2) z.B. für 6000 Hz, das mit dem ersten Eingang einer elektronischen Torschaltung (P2) verbunden ist,
   . einem digitalen Schaltkreis (CN2), der mit dem zweiten Eingang der Torschaltung (P2) verbunden ist, sodaß das Anliegen eines digitalen modulierten Signals (N3-N4) die Torschaltung (P2) so steuert (Befehl ON2), daß nur die besagte Nachricht durchgelassen wird;
- einem Vorverzerrer (MP), gefolgt von einem Unterträgermodulator (MSP), der z.B. mit 12000 Hz oder 67000 Hz von einem Schalter am Ausgang der Torschaltung (P2) der zweiten Einheit umschaltbar ist;
- einem Summierer (SO1), der die Signale, die vom Ausgang der zweiten Torschaltung (P2) und von dem Unterträgermodulator (MSP) stammen, erfaßt, und der an einen Standardleitungsadapter (AD), eine Spezialleitung (LS) oder einen Satellitenkanal (ST) angeschlossen ist.

Gemäß Fig. 6 umfaßt jeder digitale Sendeschaltkreis (CN1) oder (CN2):
- für den Kanal N2/N4 einen Trägerdetektor (DP1), gefolgt von einem Modem (MOD1), z.B. für 1000 Hz, und einem Tiefpaßfilter (FT3) z.B. für 3500 Hz,
- für den Kanal N1/N3 einen Trägerdetektor (DP2), gefolgt von einem Modem (MOD2) z.B. für 17000 Hz, und einem Tiefpaßfilter (FT4) z.B. für 3500 Hz,
- eine elektronische Torschaltung (P3), die durch die Ausgangssignale der Trägerdetektoren aktiviert wird und das Signal abgibt, das die Anwesenheit des Signals (ON1) oder (ON2) signalisiert, das für die zwei vorgenannten Torschaltungen (P1) und (P2) bestimmt ist;
- einen Summierer (SO2), der die digitalen modulierten Signale aufnimmt, die die Filter (FT3) und (FT4) verlassen, um sie als Nachrichten (N1-N2) oder (N3-N4) an die Torschaltungen zu übertragen.

Auf dem Kanal 1700 Hz (N1/N2) wird die Adressierung an einen von 64 Teilnehmern mittels Software von einem Zentralrechner durchgeführt.

Die erfindungsgemäß ausgestaltete Vorrichtung zur Ausführung des obigen Verfahrens, die in Fig. 7 dargestellt ist, umfaßt einen Empfängerschaltkreis mit folgenden Merkmalen:
- einen ersten Kanal, dargestellt durch:
   . ein Bandpaßfilter (FT5) mit einer Mittenfrequenz von z.B. 12000 Hz und einer Bandbreite in der Größenordnung von 8000 Hz,
   . einen PLL-Demodulator (DOM1) z.B. für 12000 Hz,
   . ein Bandpaßfilter (FT6) z.B. für 4500 Hz,
   . einen Expander (EX1);
- einen zweiten Kanal, bestehend aus einem Tiefpaßfilter (FT7) z.B. für 4500 Hz, für normale Audiofrequenzen;
- einen elektronischen Umschalter (COM1), der die Umschaltung ausführt zwischen:
   . normalem Audio am Ausgang des Tiefpaßfilters (FT7),
   . Audio-Unterträger am Ausgang des Expanders (EX1),
   . Standardsatellitenkanal (VS) oder Spezialleitung;
- einen digitalen Empfängerschaltkreis (CN3) am Ausgang des Expanders, der zwei digitale Datenausgänge besitzt:
   . z.B. N2/N4, der mit einem Drucker verbunden ist,
   . z.B. N1/N3, der mit einem Bildschirm verbunden ist,
   und zwei Ausgänge:
   . ein erster (CD) zur Detektion des Anwesenheitssignals,
   . ein zweiter (CC), der die Teilnehmerkennung zur Deadressierung abgibt;
- einen Schaltkreis zur Teilnehmerdeadressierung (DES), der z.B. auf dem Kanal N1/N3 (CC) geschaltet ist, der das Anwesenheitssignal (CD) empfängt und entweder einen Drucker (CD2) oder einen Bildschirm (DC1) steuert;
- er gibt zusätzlich das Signal (CA), das die Umschaltung von normalem Audio (ANO) auf Audio-Unterträger (ASP) erlaubt, ab, wenn kein digitales Signal detektiert wird.

Gemäß Fig. 8 umfaßt der digitale Empfängerschaltkreis (CN3):
- eine digitale Filteranlage (FN);
- einen Demodulator (DMO2), z.B. für 1000 Hz für den Kanal N2/N4, der einem Pegeladapter (NV3) der Normen RS 232 vorgeschaltet ist;
- einen Demodulator (DMO3), z.B. für 17000Hz für den Kanal N1/N3, der einem Pegeladapter der Normen RS 232 vorgeschaltet ist;
- einen Trägerdetektor (DP3), der z.B. mit dem Kanal N1/N3 verbunden ist und der das Anwesenheitssignal (CD) abgibt.

Gemäß Fig. 9 umfaßt der Schaltkreis zur Teilnehmerdeadressierung (DES):
- den Eingang (CC), der von dem Pegeladapter (NV3) stammt und der verbunden ist mit:
   . einem Monoflop (MNO) zur Detektierung von Impulsserien, der einem Zähler vorgeschaltet ist, der bis zehn zählt (C10) und einem Zähler, der bis acht zählt (C08), nach jeder Serie von 10 Nachrichten auf Null rücksetzt,
   . einen Serien/Parallel-Wandler (COV) für 8 Bits und einen Taktgenerator (IIO), der mit dem Wandler verbunden ist;
- den Eingang (CD), der den Wandler wieder auf Null rücksetzt und der vom Schaltkreis des Trägerdetektors (DP3) stammt;
- einen Komparator (COP), der die Parität zwischen den 6 Bits mit der niedrigsten Wichtung und der Teilnehmerkennung, die mittels 6 Schaltern (INT) eingestellt ist, realisiert;
- einen astabilen Schaltkreis (AST), der durch die Parität getriggert wird, die vom Zähler stammt, der bis 8 zählt, und mit einem programmierbaren Schaltkreis (PRO) mit einer Schaltzeit von z.B. 2, 4 oder 8 Minuten und einer Torschaltung (P5) verbunden ist, die den Umschaltbefehl (CA) an den Audioumschalter (COM) derart gibt, daß die Dauer der Astabilität länger ist als die der einzelnen einzufügenden Audionachricht. Aufgrund der zeitlichen Zerlegung ist kein Übergang bei der Umschaltung von normalem Audio auf Audiounterträger (dargestellt durch Fig. 11) akustisch wahrnehmbar;
- einen 2 aus 3-Dekoder, der durch die zwei Ausgänge der Torschaltung (P4) aktiviert wird und folgendes liefert:
   . ein erstes Signal (S1), das das Flipflop (BIS), das z.B. den Befehl für den Drucker speichert, in den Arbeitszustand versetzt,
   . ein zweites Signal (S2), das das Flipflop (BIS) in den Ruhezustand rücksetzt,
   . ein drittes Signal (S3), das z.B. den Bildschirm in Betrieb setzt;
- einen RS 232 Pegeladapter (NV4), der das vom Flipflop kommende Signal, welches zu (CD2) wird, und das Signal vom 2/3-Dekoder, das zu (CD1) wird, übernimmt;
- eine Torschaltung (P6), die jede Audionachricht auf dem Pegel der Torschaltung (P5) sperrt, solange eine digitale Nachricht detektiert und geprüft wird.

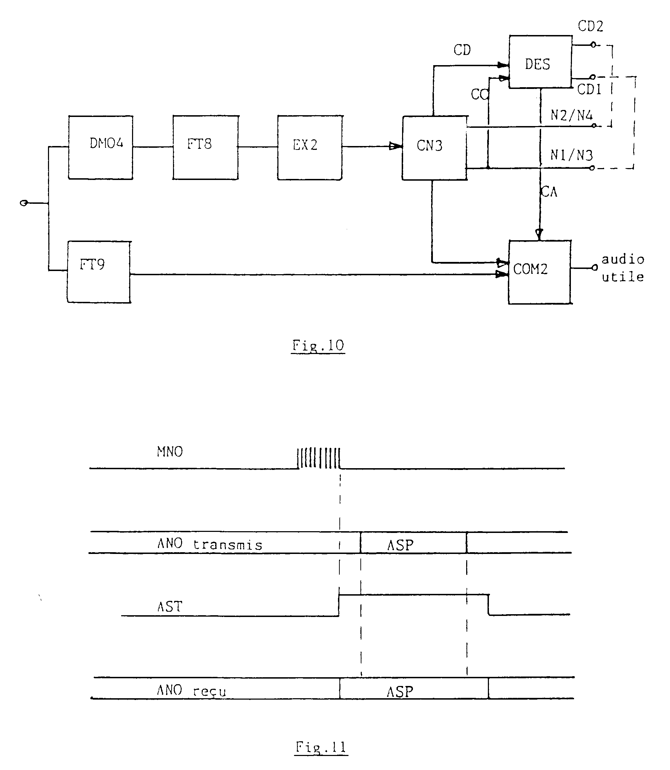

Gemäß Fig. 10 umfaßt der Empfängerschaltkreis der SCA-Version:
- einen ersten Audio-Unterträgerkanal (ASP), der aus einem SCA-Demodulator (DMO4) besteht, gefolgt von einem Tiefpaßfilter (FT8) z.B. für 7000 Hz und einem Expander (EX2);
- einen zweiten normalen Audiokanal (ANO), der ein Tiefpaßfilter (FT9) für z.B. 4500 Hz enthält;
- einen Umschalter (COM2), der die Ausgänge des Expanders und des Tiefpaßfilters (FT9) übernimmt:
- einen digitalen Empfängerschaltkreis (CN3) vom gleichen Typ wie zuvor beschrieben;
- einen Schaltkreis zur Deadressierung (DES) vom gleichen Typ wie zuvor beschrieben.

Ein solches System kann vorteilhafterweise gewerblich für die Nachrichtenübertragung und für das Marketing benutzt werden, beispielsweise in der Werbung, in Reisebüros und dgl..

Die Benutzung eines einzigen Kanals zur Übertragung entweder zweier Audionachrichten oder einer Audionachricht und einer doppelten digitalen Nachricht oder zweier doppelter digitaler Nachrichten und die Adressierung derselben an 64 bestimmte Teilnehmer erlaubt die Erzielung bedeutender Einsparungen.

## Patentansprüche

1. Vorrichtung zur Übertragung von Audioinformationen und/oder digitalen Informationen, z.B. über Satellitenkanal (ST) oder einer Spezialleitung (LS), wobei das Standardband von 40-15000Hz in zwei Teilkanäle (I und II) geteilt wird, die jeweils geeignet sind, abwechselnd oder simultan eine Audionachricht (ANO oder ASP) oder zwei simultane digitale Nachrichten (2N) zu übertragen, dadurch **gekennzeichnet**, daß sie einen Sendeschaltkreis umfaßt, welcher enthält:
- eine erste Audionormal-(ANO)-Digital-(N1-N2)-Einheit, bestehend aus
. einem Pegeladapter (NV1), gefolgt von einem Tiefpaßfilter (FT1) mit einer Grenzfrequenz von z.B. 4500 Hz, das mit dem ersten Eingang einer ersten elektronischen Torschaltung (P1) verbunden ist,
. einem ersten digitalen Schaltkreis (CN1), der mit dem zweiten Eingang der ersten Torschaltung (P1) verbunden ist, so daß das Vorhandensein eines digitalen modulierten Signals (N1-N2) die Torschaltung (P1) veranlaßt (Befehl N1), nur die besagte Nachricht durchzulassen;
- eine zweite Audiounterträger-(ASP)-Digital-(N3-N4)-Einheit bestehend aus:
. einem Pegeladapter (NV2), gefolgt von einem Tiefpaßfilter (FT2) mit einer Grenzfrequenz von z.B. 6000 Hz, das mit dem ersten Eingang einer zweiten elektronischen Torschaltung (P2) verbunden ist,
. einem zweiten digitalen Schaltkreis (CN2), der mit dem zweiten Eingang der zweiten Torschaltung (P2) verbunden ist, so daß das Anliegen eines digitalen modulierten Signals (N3-N4) die Torschaltung (P2) veranlaßt (Befehl ON2), nur die besagte Nachricht durchzulassen;
- eine Preemphasisschaltung (MP), die einen Unterträgermodulator (MSP) umfaßt, der mit z.B. 12000 Hz oder 67000 Hz durch Umschalter umschaltbar ist und am Ausgang der zweiten Torschaltung (P2) der zweiten Einheit vorgesehen ist;
- einen Summierer (SO1), der die Signale vom Ausgang der ersten Torschaltung (P1) und die des Unterträgermodulators (MSP) aufnimmt und einem Standardleitungsadapter (AD), einer Spezialleitung (LS) oder einem Satellitenkanal (ST) vorgeschaltet ist.

2. Vorrichtung nach Anspruch 1, dadurch **gekennzeichnet**, daß jede Audionachricht oder digitale Nachricht programmgesteuert über die Teilkanäle an einen von 64 möglichen Teilnehmern adressierbar ist.

3. Vorrichtung nach Anspruch 2, dadurch **gekennzeichnet**, daß jede einem bestimmten Benutzer zugeordnete Nachricht erst dann auswertbar ist, wenn von zehn in Folge und innerhalb einer bestimmten Zeit empfangenen Befehlen acht identisch sind.

4. Vorrichtung nach einem der Ansprüche 1 bis 3, **gekennzeichnet** durch die folgenden Merkmale:
- der Teilkanal I liegt in einem Frequenzbereich, der von etwa 40 bis etwa 4500 Hz reicht;
- der Teilkanal II liegt in einem Frequenzbereich, der von etwa 4500 bis etwa 15000 Hz reicht.

5. Vorrichtung nach Anspruch 4, **gekennzeichnet** durch die folgenden Merkmale:
- die normale Audionachricht (AMO), die eine Übertragungsbandbreite von etwa 4000 Hz aufweist, ist über den Teilkanal I übertragbar,
- die Unterträgeraudionachricht (ASP), die eine Übertragungsbandbreite von etwa 4000 Hz hat, ist über den Teilkanal II übertragbar.

6. Vorrichtung nach einem der Ansprüche 1 bis 3, dadurch **gekennzeichnet**, daß eine Audionachricht oder zwei digitale Nachrichten eines Teilkanals gleichermaßen übertragbar sind:
- entweder mittels eines frequenzmodulierten Stereosenders nach dem SCA-Unterträgerverfahren,
- oder mittels eines frequenzmodulierten Monosenders unter Verwendung des Vielfach-SCA-Unterträgerverfahrens,
- oder mittels eines Telefons oder Funktelefons mit einem Übertragungsband, das auf den Frequenzbereich von 200 bis 3500 Hz reduziert ist.

7. Vorrichtung nach einem der Ansprüche 1 bis 6, dadurch **gekennzeichnet**, daß jeder der digitalen Sendeschaltkreise (CN1) oder CN2) umfaßt:
- für den Kanal N2/N4 einen Trägerdetektor (DP1), gefolgt von einem Modem (MOD1), z.B. für 1000 Hz, und einem Tiefpaßfilter (FT3), z.B. für 3500 Hz,
- für den Kanal N1/N3 einen Trägerdetektor (DP2), gefolgt von einem Modem (MOD2), z.B. für 1700 Hz und einem Tiefpaßfilter (FT4), z.B. für 3500 Hz,
- eine dritte elektronische Torschaltung (P3), die von den Ausgangssignalen des Trägerdetektors aktiviert wird und das Anwesenheitssignal (ON1) oder (ON2) für die beiden ersten und zweiten Torschaltungen (P1, P2) liefert,
- einen Summierer (SO2), der die digitalen modulierten Nachrichten empfängt, die die Filter (FT3) und (FT4) verlassen, um sie an die Torschaltungen als Nachrichten (N1-N2) oder (N3-N4) zu übertragen.

8. Vorrichtung nach einem der Ansprüche 1 bis 7, dadurch **gekennzeichnet**, daß sie einen Empfängerschaltkreis umfaßt, der folgende Merkmale enthält:
- einen ersten Kanal, bestehend aus:
. einem Bandpaßfilter (FT5) mit einer Mittenfrequenz von z.B. 12000 Hz und einer Übertragungsbandbreite in der Größenordnung von 8000 Hz,
. einem PLL-Demodulator (DOM1), z.B. für 12000 Hz,
. einem Tiefpaßfilter (FT6) mit einer Grenzfrequenz von 4500 Hz,
. einem Expander (EX1);
- einen zweiten Kanal, gebildet aus einem Tiefpaßfilter (FT7) einer Grenzfrequenz von z.B. 4500 Hz für normales Audio;
- einen elektronischen Umschalter (COM1), der die Umschaltung erlaubt zwischen:
. normales Audio am Ausgang des Tiefpaßfilters (FT7),
. Audio-Unterträger am Ausgang des Expanders (EX1),
. Standardsatellitenkanal (VS) oder Spezialleitung;
- einen digitalen Empfängerschaltkreis (CN3) am Ausgang des Expanders mit zwei digitalen Datenausgängen:
. z.B. N2/N4, der einem Drucker vorgeschaltet ist,
. z.B. N1/N3, der einem Bildschirm vorgeschaltet ist, und zwei Ausgängen:
. den ersten (CD) für das Anwesenheitssignal,
. den zweiten (CC), der die Teilnehmererkennung zur Deadressierung abgibt;
- einen Schaltkreis zur Teilnehmerdeadressierung (DES), der z.B. mit dem Kanal N1/N3 (CC) verbunden ist und das Anwesenheitssignal (CD) empfängt und entweder einen Drucker (CD2) oder einen Bildschirm (CD1) steuert und außerdem das Signal (CA), das die Umschaltung normales Audio (ANO)/Audio-Unterträger (ASP) erlaubt, abgibt, solange er kein digitales Signal detektiert.

9. Vorrichtung nach Anspruch 8, dadurch **gekennzeichnet**, daß der digitale Empfängerschaltkreis (CN3) folgendes umfaßt:
- eine digitale Filteranlage (FN);
- einen Demodulator (DMO2) für z.B. 1000 Hz für den Kanal N2/N4, der dem Pegeladapter (NV3) der Norm RS 232 vorgeschaltet ist;
- einen Demodulator (DMO3) für z.B. 17000 Hz für den Kanal N1/N3, der dem Pegeladapter (NV3) der Norm RS 232 vorgeschaltet ist;
- einen Trägerdetektor (DP3), der z.B. dem Kanal N1/N3 vorgeschaltet ist und das Anwesenheitssignal (CD) liefert.

10. Vorrichtung nach Anspruch 8, dadurch **gekennzeichnet**, daß der Schaltkreis für die Teilnehmerdeadressierung (DES) folgende Merkmale umfaßt:
- der Eingang (CC), der von dem Pegeladapter (NV3) herrührt, ist verbunden mit:
. einem einem Monoflop (MNO) zur Detektierung von Impulsserien, der einem Zähler (C10) vorgeschaltet ist, der bis zehn zählt und einen Zähler, der bis acht zählt, nach jeder Serie von zehn Nachrichten auf Null rückstellt,
. einem Bit-Serien/Parallel-Wandler (COV) und einem Taktgeber (HO), der seinerseits mit dem Wandler verbunden ist;
- der Eingang (CD), der von dem Trägerdetektor (DP3) herrührt, stellt den Wandler auf null zurück;
- einen Vergleicher (COP), der die Parität zwischen den 6 Bits der niedrigsten Wertigkeit und der Teilnehmerkennung, die mittels sechs Schaltern (INT) eingestellt ist, prüft;
- eine vierte Torschaltung (P4), die durch die zwei Bits der höchsten Wertigkeit, die als Servicebefehl dienen, aktiviert und von dem Komparator (COP) wirksam gemacht wird;
- eine astabile Schaltung (AST), die durch die ermittelte Parität ausgelöst wird, die von dem Zähler herrührt, der bis 8 zählt und ihrerseits mit einem programmierbaren Zeitschaltkreis, z.B. für 2, 4 oder 8 Minuten, und einer fünften Torschaltung (P5) verbunden ist, die den Umschaltbefehl (CA) für den Audioumschalter (COM) in der Weise gibt, daß die Dauer der Astabilität länger ist, als die der einzfügenden besonderen Nachricht;
- einen 2/3-Dekoder, der von den beiden Ausgängen der vierten Torschaltung (P4) aktiviert wird und der abgibt:
. ein erstes Signal (S1), das den Flipflop (BIS), der z.B. den Befehl für den Drucker speichert, in den Arbeitszustand versetzt,
. ein zweites Signal (S2), das den Flipflog (BIS) in den Ruhezustand rücksetzt,
. ein drittes Signal (S3), das z.B. den Bildschirm einschaltet,
- einen Pegeladapter (N4) der Norm RS 232, der das Signal, das von dem Flipflop stammt und das zu (CD2) wird, und das Signal, das vom 2/3-Dekoder herrührt und welches zu (CD1) wird, entgegennimmt;
- eine sechste Torschaltung (P6), die alle Audionachrichten in der Höhe der fünften Torschaltung (P5) sperrt, wenn eine digitale Nachricht detektiert und erkannt worden ist.

11. Vorrichtung nach einem der Ansprüche 1 bis 7, 9 oder 10, dadurch **gekennzeichnet**, daß sie einen Empfängerschaltkreis enthält, der in der SCA-Version folgendes umfaßt:
- einen ersten Audio-Unterträgerkanal (ASP), dargestellt durch einen SCA-Demodulator (DOM4), gefolgt von einem Tiefpaßfilter (FT8) einer Grenzfrequenz von z.B. 7000 Hz und einem Expander (EX2);
- einen zweiten normalen Audiokanal (ANO) mit einem Tiefpaßfilter (FT9) einer Grenzfrequenz von z.B. 4500 Hz;
- einen Umschalter (COM2), der die Ausgänge des Expanders und des Tiefpaßfilters (FT9) annimmt;
- einen digitalen Empfängerschaltkreis (CN3), des im Anspruch 9 beschriebenen Typs;
- einen Schaltkreis zur Teilnehmerdeadressierung (DES) des im Anspruch 10 beschriebenen Typs.

## Claims

1. Apparatus for transmitting audio and/or digital information, e.g. via satellite channel (ST) or a special line (LS), the standard band of 40-15000 Hz being subdivided into two partial channels (I and II), such channels each being adapted for transmitting, alternatingly or simultaneously, an audio message (ANO or ASP) or two simultaneous digital messages (2N), characterized in that it comprises a transmitting circuit which embraces:
- a first audio normal-(ANO)-digital-(N1-N2)-unit, consisting of
. a level adapter (NV1), followed by a low-pass filter (FT1) having a cut-off frequency of e.g. 4500 Hz, which is connected with a first input of a first electronic gate circuit (P1),
. a first digital switching circuit (CN1) which is connected with the second input of the first gate circuit (P1), so that the appearance of a digitally modulated signal (N1-N2) causes the gate circuit (command N1) to let pass the said message only;
- a second audio-subcarrier-(ASP)-digital-(N3-N4)-unit consisting of:
. a level adapter (NV2) followed by a low-pass filter (FT2) having a cut-off frequency of e.g. 6000 Hz, which is connected with the first input of a second electronic gate circuit (P2),
. a second digital switching circuit (CN2) which is connected with the second input of the second gate circuit (P2), so that the appearance of a digitally modulated signal (N3-N4) causes (command ON2) the gate circuit (P2) to let pass the said message only;
- a pre-emphasis circuit (MP) comprising a subcarrier-modulator (MSP) which is switch-selectable e.g. with 12000 Hz or 67000 Hz by means of a changeover switch and which is provided at the output of the second gate circuit (P2) of the second unit;
- an adder (SO1) which receives the signals from the output of the first gate circuit (P1) and those of the subcarrier modulator (MSP) and which is series-connected upstream of a standard line adapter (AD), a special line (LS) or a satellite channel (ST).

2. Apparatus in accordance with Claim 1, **characterized in** that every audio message or digital message is program-controlled addressable to one of 64 possible users by means of the partial channels.

3. Apparatus in accordance with Claim 2, **characterized in** that every message associated with a certain user is evaluable only if eight out of ten commands received in sequence and within a predetermined time period are identical.

4. Apparatus in accordance with one of the claims 1 through 3, **characterized by** the following features:
- the partial channel I is situated in a frequency range which reaches from about 40 to about 4500 Hz;
- the partial channel II is situated in a frequency range which reaches from about 4500 to about 15000 Hz.

5. Apparatus in accordance with claim 4, **characterized by** the following features:
- the normal audio message (AMO) which has a transmission bandwidth of about 4000 Hz, is transmittable through partial channel I,
- the subcarrier audio message (ASP) which has a transmission bandwidth of about 4000 Hz, is transmittable through partial channel II.

6. Apparatus in accordance with one of the claims 1 through 3, **characterized inthat** one audio message or two digital messages of one partial channel are equally transmittable:
- either by means of a frequency-modulated stereo transmitter station in accordance with the SCA subcarrier method,
- or by means of a frequency-modulated mono-transmitter using the multiple SCA subcarrier method,
- or by means of a telephone or radio telephone having a transmission band which is reduced to the frequency range of 200 through 3500 Hz.

7. Apparatus in accordance with one of the claims 1 through 6, **characterized inthat** everyone of the digital transmission circuits (CN1 or CN2) comprises:
- for the N2/N4 channel, a carrier detector (DP1) followed by a modem (MOD1), e.g. for 1000 Hz, and a low-pass filter (FT3), e.g. for 3500 Hz,
- for the N1/N3 channel, a carrier detector (DP2) followed by a modem (MOD2), e.g. for 1700 Hz, and a low-pass filter (FT4), e.g. for 3500 Hz,
- a third electronic gate circuit (P3) which is activated by the output signals of the carrier detector and supplies the presence signal (ON1) or (ON2) for the two first and second gate circuits (P1, P2),
- an adder (SO2) receiving the digitally modulated messages which output the filters (FT3) and (FT4), in order to transmit them to the gate circuits as messages (N1-N2) or (N3-N4).

8. Apparatus in accordance with one of the claims 1 through 7, **characterized in** **that** it comprises a receiver circuit which contains the following features:
- A first channel, consisting of:
. a bandpass filter (FT5) having a mid-frequency of e.g. 12000 Hz and a transmission bandwidth in the magnitude of 8000 Hz,
. a PLL demodulator (DOM1), e.g. for 12000 Hz,
. a low-pass filter (FT6) with a cut-off frequency of 4500 Hz,
. an expander (EX1);
- a second channel, consisting of a low-pass filter (FT7) of a cut-off frequency of e.g. 4500 Hz for normal audio;
- an electronic changeover switch (COM1) which allows the switchover between:
. normal audio at the output of the low-pass filter (FT7),
. audio subcarrier at the output of the expander (EX1),
. standard satellite channel (VS) or special line;
- a digital receiver circuit (CN3) at the output of the expander with two digital data outputs:
. e.g. N2/N4, which is connected in series upstream of a printer,
. e.g. N1/N3, which is connected in series upstream of a display screen
. and two outputs:
. the first one (CD) for the presence signal,
. the second one (CC) which supplies the user ID for de-addressing;
- a circuit for user de-addressing (DES), which is connected e.g. with the channel N1/N3 (CC) and receives the presence signal (CD) and controls either a printer (CD2) or a display screen, and supplies furthermore the signal (CA) which allows the switchover from normal audio (ANO) to audio subcarrier (ASP) as long as it does not detect a digital signal.

9. Apparatus in accordance with Claim 8, **characterized in** that the said digital receiver circuit (CN3) comprises as follows:
- a digital filter device (FN);
- a demodulator (DMO2) for e.g. 1000 Hz for the N2/N4 channel which is connected upstream of the level adapter (NV3) of the RS 232 Standard;
- a demodulator (DMO3) for e.g. 17000 Hz for the N1/N3 channel which is connected upstream of the level adapter (NV3) of the RS 232 Standard;
- a carrier detector (DP3) which is connected upstream e.g. of the N1/N3 channel and supplies the presence signal (CD).

10. Apparatus in accordance with Claim 8, **characterized in** that the said circuit for user deaddressing (DES) comprises the following features:
- the input (CC) coming from the level adapter (NV3) is connected with:
. a monoflop (MNO) for detecting pulse series, which is series connected upstream of a counter (C10) counting up to ten and resetting a counter counting up to eight down to zero after each series of ten messages,
. a bit-series/parallel converter (COV) and a clock (HO) which is connected with the converter for its part;
- the input (CD) coming from the carrier detector (DP3) resets the converter back to zero;
- a comparator (COP) which checks the parity between the 6 lowermost bits and the user ID which is set by means of six switches (INT);
- a fourth gate circuit (P4) which is activated by the two uppermost bits serving as service command, and is enabled by the comparator (COP);
- an astable circuit (AST) which is triggered by the detected parity coming from the counter counting up to eight, and which is connected, on its part, with a programmable timer circuit, e.g. for 2, 4 or 8 minutes, and a fifth gate circuit (P5) which supplies the switchover command (CA) for the audio changeover switch (COM) in a way that the duration of the astability is longer than that of the special message to be inserted;
- a 2/3 decoder which is activated by the two outputs of the fourth gate circuit (P4) and which supplies:
. a first signal (S1) which sets the flip flop (BIS) storing e.g. thecommand for the printer, into the operative state,
. a second signal (S2) which resets the flip flop (BIS) into the inoperative state,
. a third signal (S3) which enables e.g. the display screen,
- a level adapter (N4) of the RS 232 Standard which receives the signal coming from the flip flop and becoming (CD2), and the signal coming from the 2/3 decoder and becoming (CD1);
- a sixth gate circuit (P6) which bars all audio messages on the level of the fifth gate circuit (P5) if a digital message has been detected and recognized.

11. Apparatus in accordance with one of the claims 1 through 7, 9 or 10, **characterized in that** it comprises a receiver circuit which comprises, in the SCA version, as follows:
- a first audio subcarrier channel (ASP), represented by a SCA demodulator (DOM4), followed by a low-pass filter (FT8) of a cut-off frequency of e.g. 7000 Hz and an expander (EX2);
- a second normal audio channel (ANO) with a low-pass filter (FT9) of a cut-off frequency of e.g. 4500 Hz;
- a changeover switch (COM2) which receives the outputs of the expander and of the low-pass filter (FT9);
- a digital receiver circuit (CN3) of the type as described in claim 9 above; and
- a circuit for deaddressing the users (DES) of the type as described in claim 10 above.

## Revendications

1. Dispositif de transmission d'information audio et/ou numérique, par exemple par voie satellite (ST) ou ligne spécialisée (LS), donné que la bande standard 40-15000 Hz soit découpée en deux voies élémentaires (I et II) qui sont aptes à véhiculer un message audio (ANO ou ASP), en alternance ou simultanément, ou bien deux messages numériques simultanés (2N), **caractérisé en ce** qu'il comprend un circuit de transmission qui comporte:
- une première unité audio normale (ANO) numérique (N1-N2) étant composée de:
. un adaptateur de niveau (NV1), suivi d'un filtre passe-bas (FT1) d'une fréquence de coupure, par exemple, de 4500 Hz, relié à la première entrée d'une porte électronique (P1),
. un premier circuit numérique (CN1) relié à la deuxième entrée. de la première porte électronique (P1), ainsi que la présence d'un signal (N1-N2) numérique modulé valide (ordre N1) la porte (P1) pour ne pas laisser passer que ledit message;
- une deuxième unité audio sous-porteuse (ASP) numérique (N3-N4) étant composée de:
. un adaptateur de niveau (NV2) suivi d'un filtre passe-bas (FT2) d'une fréquence de coupure, par exemple, de 6000 Hz, relié à la première entrée d'une deuxième porte électronique (P2),
. un deuxième circuit numérique (CN2) relié à la deuxième entrée de la deuxième porte électronique (P2), ainsi que la présence d'un signal (N3-N4) numérique modulé valide (ordre ON2) la porte (P2) pour ne pas laisser passer que ledit message;
- un moyen de préaccentuation (MP) comprenant un modulateur de sous-porteuse (MSP) qui soit commutable par commutateur à 12000 Hz ou 67000 Hz placé en sortie de la deuxième porte (P2) de la deuxième unité,
- un sommateur (SO1) récupérant les signaux provenant de la sortie de la première porte (P1) et du modulateur de sous-porteuse (MSP) montés en série en amont d'un adaptateur de ligne (AD) standard, d'une ligne spécialisée (LS) ou bien d'une voie de transmission satellite (ST).

2. Dispositif selon la revendication 1, **caractérisé en ce** que chaque message audio ou numérique peut être adressé, par programme, à l'un des 64 utilisateurs possibles par les voies élémentaires.

3. Dispositif selon la revendication 2, **caractérisé en ce** que tout message, spécifique à un utilisateur donné, n'est validé qu'à partir du moment où, sur dix ordres reçus en continu et dans un temps bien défini, huit d'entre eux sont identiques.

4. Dispositif selon l'une quelconque des revendications 1 à 3, **caractérisé en ce** que:
- la voie élémentaire I se situe dans la zone des fréquences comprises entre 40 et 4500 Hz environ;
- la voie élémentaire II se situe dans la zone de fréquences comprises entre 4500 et 15000 Hz environ.

5. Dispositif selon la revendication 4, **caractérisé en ce** que:
- le message audio normal (AMO) qui a une bande passante d'environ 4000 Hz est véhiculé par la voie élémentaire I;
- le message audio sous-porteuse (ASP) qui a une bande passante d'environ 4000 Hz est véhiculé par la voie élémentaire II;

6. Dispositif selon l'une quelconque des revendications 1 à 3, **caractérisé en ce** qu'un message audio ou les deux messages numériques d'une voie élémentaire peuvent être également transmis:
- soit au moyen d'un émetteur à modulation de fréquence stéréo en utilisant le procédé de sous-porteuse SCA;
- soit au moyen d'un émetteur à modulation de fréquence mono en utilisant le procédé de sous-porteuses SCA multiples;
- soit au moyen d'un téléphone ou radio-téléphone dans la bande réduite 200-3500 Hz.

7. Dispositif selon l'une quelconque des revendications 1 à 6, **caractérisé en ce** que chaque circuit numérique d'émission (CN1) ou (CN2) comporte:
- pour la voie N2/N4 un détecteur de porteuse (DP1) suivi d'un modem (MOD1), par exemple 1000 Hz, et d'un filtre passe-bas (FT3), par exemple 3500 Hz,
- pour la voie N1/N3 un détecteur de porteuse (DP2) suivi d'un modem (MOD2), par exemple 1700 Hz, et d'un filtre passe-bas (FT4), par exemple 3500 Hz,
- une troisième porte électronique (P3) activée par les signaux sortant desdits détecteurs de porteuse et fournissant le signal de présence (ON1) ou (ON2) destiné aux deux portes précédentes (P1) et (P2);
- un sommateur (SO2) recueillant les messages numériques modulés sortant des filtres (FT3) et (FT4) pour les transmettre auxdites portes comme des messages (N1-N2) ou (N3-N4).

8. Dispositif selon l'une quelconque des revendications 1 à 7, **caractérisé en ce** qu'il comporte un circuit de réception comprenant les caractéristiques suivants:
- une première voie constituée par:
. un filtre passe-bande (FT5), centré par exemple sur 12000 Hz et de bande passante de l'ordre de 8000 Hz;
. un démodulateur (DOM1) du type PLL, par exemple de 4500 Hz;
. un filtre passe-bas (FT6) d'une fréquence de coupure, par exemple, de 4500 Hz;
. un expanseur (EX1);
- une deuxième voie constituée par un filtre passe-bas (FT7) d'une fréquence de coupure, par exemple, de 4500 Hz pour l'audio normal;
- un commutateur électronique (COM1) permettant la commutation:
. audio normal en sortie du filtre passe-bas (FT7),
. audio sous-porteuse en sortie de l'expanseur (EX1),
. voie standard (VS) satellite ou ligne spécialisée;
- un circuit numérique réception (CN3), en sortie dudit expanseur, possédant deux sorties données numériques:
. par exemple N2/N4 reliée à une imprimante,
. par exemple N1/N3 reliée à un écran,
et deux sorties:
. la première (CD) pour le signal de présence,
. la deuxième (CC) donnant le code client à désadresser;
- un circuit de désadressage client (DES), branché par exemple sur la voie N1/N3 (CC), recevant le signal de présence (CD), et commandant soit une imprimante (CD2), soit un écran (CD1); il délivre, en outre, le signal (CA) permettant la commutation audio normal (ANO)/audio sous-porteuse (ASP) lorsqu'il n'y a pas de détection de signal numérique.

9. Dispositif selon la revendication 8, **caractérisé en ce** que le circuit numérique de réception (CN3) comporte:
- un filtrage numérique (FN);
- un démodulateur (DMO2), par exemple 1000 Hz, pour la voie N2/N4, monté en série en amont de l'adaptateur de niveau (NV3) aux normes RS 232;
- un démodulateur (DMO3), par exemple 1700 Hz, pour la voie N1/N3, monté en série en amont de l'adaptateur de niveau (NV3) aux normes RS 232;
- un détecteur de porteuse (DP3) monté en série en amont, par exemple, de la voie N1/N3, fournissant le signal de présence (CD).

10. Dispositif selon la revendication 8, **caractérisé en ce** que le circuit de désadressage client (DES) comporte les caractérisations suivantes:
- l'entrée (CC) provenant de l'adaptateur de niveau (NV3) est reliée:
. à un monostable (MNO) de détection de trains d'impulsions monté en série en amont d'un compteur par 10 (C10) venant remettre à zéro un compteur par 8 (C08) au fin de chaque série de 10 messages,
. à un convertisseur (COV) bits série/parallèle et à une horloge (HO) elle même reliée audit convertisseur;
- entrée (CD) provenant du circuit de détection de porteuse (DP3), qui vient remettre à zéro ledit convertisseur;
- un comparateur (COP) vérifiant la parité entre les 6 bits de poids le plus faible et le code client réalisé au moyen de six interrupteurs (INT);
- une quatrième porte (P4) activée par les deux bits de poids le plus fort, servant d'ordre de service, et validée par le comparateur (COP);
- un circuit astable (AST) déclenché par la parité validée provenant du compteur par 8, relié lui même à un circuit de programmation (PRO) de durée par exemple 2, 4 ou 8 minutes, et à une cinquième porte (P5) donnant l'ordre de commutation (CA) au commutateur audio (COM) de telle manière que la duré de l'astabilité soit supérieure à celle du message audio particulier à insérer;
- un décodeur 2 parmi 3 activé par les deux sorties de la quatrième porte (P4) et fournissant:
. un premier signal (S1) mettant le bistable (BIS), qui mémorise par exemple l'ordre pour l'imprimante, en position travail,
. un deuxième signal (S2) remettant ledit bistable en position repos,
. un troisième signal (S3) mettant en route, par exemple, l'écran;
- un adaptateur de niveau (NV4) aux normes RS 232 reprenant le signal de provenance dudit bistable, qui devient (CD2), et celui en provenance du décodeur 2 parmi 3, qui devient (CD1);
- une sixième porte (P6) venant interdire tout message audio au niveau de la cinquième porte (P5) lorsqu'un message numérique a été détecté et validé.

11. Dispositif selon l'une quelconque des revendications 1 à 7, 9 ou 10, **caractérisé en ce** qu'il comporte un circuit de réception comprenant, dans la version SCA:
- une première voie audio sous-porteuse (ASP) constituée par un démodulateur SCA (DOM4), suivi par un filtre passe-bas (FT8) d'une fréquence de coupure, par exemple, de 7000 Hz, et d'un expanseur (EX2);
- une deuxième voie audio normale (ANO) comportant un filtre passe-bas (FT9) d'une fréquence de coupure, par exemple, de 4500 Hz;
- un commutateur (COM2) reprenant les sorties de l'expanseur et du filtre passe-bas (FT9);
- un circuit numérique réception (CN3) du type décrit à la revendication 9;
- un circuit désadressage client (DES) du type décrit à la revendication 10.
